# FASCICULE DE BREVET EUROPEEN

(11) **EP 0 625 248 B1**
(45) Date de publication et mention de la délivrance du brevet: **03.07.1996**
(21) Numéro de dépôt: 94902011.9
(22) Date de dépôt: 09.12.1993
(51) Int. Cl.: F16D 25/08

(54) **DISPOSITIF DE DEBRAYAGE A ACTIONNEUR HYDRAULIQUE, NOTAMMENT POUR ACTION EN TRACTION SUR LA PIECE D'ACCOSTAGE D'UN EMBRAYAGE**
HYDRAULISCHE AUSRÜCKVORRICHTUNG, INSBESONDERE ZUR ZUGKRAFTBETÄTIGUNG EINES KUPPLUNGSDRUCKRINGES
DISENGAGING DEVICE HAVING A HYDRAULIC ACTUATOR, IN PARTICULAR FOR PULLING/DRIVING A CLUTCH ENGAGEMENT PART

(30) Priorité: 09.12.1992 FR 9214855
(43) Date de publication de la demande: 23.11.1994
(73) Titulaire: VALEO, 75848 Paris Cédex 17 (FR)
(72) Inventeur: MARTINEZ CORRAL, Cécilio, E-Madrid 27 (ES)
(74) Mandataire: Gamonal, Didier
(86) Numéro de dépôt international: FR9301220
(87) Numéro de publication internationale: WO9413972

(56) Documents cités:
- EP-A- 0 383 576
- DE-U- 9 100 927
- US-A- 4 684 003
- US-A- 5 014 841

## Description

La présente invention concerne d'une manière générale un dispositif de débrayage doté d'une butée de débrayage, pour action en traction sur la pièce d'accostage d'un embrayage.

Un tel dispositif est décrit dans le document FR-A-2 304 826. Dans celui-ci la pièce d'accostage, formant bague de débrayage, appartient à un bloc primaire comprenant le moteur et son embrayage.

Cette pièce est convenablement rapportée sur le dispositif débrayeur de l'embrayage en l'occurrence les doigts d'un diaphragme. La butée de débrayage appartient à un bloc secondaire comprenant la boîte de vitesses avec son arbre d'entrée. Cette butée est montée mobile axialement le long d'un tube-guide sous l'action d'une fourchette de débrayage montée pivotante sur un capot de carter solidaire de la boîte de vitesses.

Des moyens de solidarisation en traction, à organe de couplage radialement élastique, sont établis entre la pièce d'accostage et une pièce d'attaque appartenant à la butée de débrayage.

Ainsi lors de l'assemblage il faut rapprocher axialement les blocs primaire et secondaire pour procéder à un montage par encliquetage ou clipsage. A cet effet des bossages sont prévus sur la butée pour que la fourchette puisse également entraîner la butée en sens opposé au sens normal de débrayage.

Ainsi en désaccouplant la fourchette de la timonerie de commande, on peut faire basculer la fourchette en sens inverse pour procéder au montage en aveugle par encliquetage de la butée de débrayage avec la pièce d'accostage, grâce à l'organe de couplage.

Ces dispositions ne peuvent être appliquées lorsque la butée de débrayage est attelée à un actionneur hydraulique. Par exemple, comme décrit dans le document FR-A-2 651 846, le dispositif de débrayage, pour action en traction sur la pièce d'accostage d'un embrayage, en particulier pour véhicule automobile, comporte dans ce cas, d'une part, un actionneur hydraulique comprenant au moins une pièce fixe et une pièce mobile en relation de cylindre piston pour définition d'une première chambre de commande et, d'autre part, une butée de débrayage attelée à la pièce mobile et manoeuvrable par celle-ci dans un premier sens axial, dit sens de débrayage, pour transmettre par traction une force de débrayage à la pièce d'accostage.

Dans ce document, on a prévu pour permettre un montage par encliquetage, une butée qui empêche un mouvement de la butée de débrayage lors du montage.

Cette butée appartient à une tige présentant une gorge en forme de V à son extrémité.

La tige est solidaire d'un piston déplaçable à l'intérieur d'un cylindre formé à la faveur d'une protubérance de la partie fixe de l'actionneur. Cette tige est soumise à l'action d'un ressort. Lors du montage, on retire tout d'abord manuellement la butée de débrayage, puis on déplace manuellement le piston pour faire sortir la butée. Après le ressort maintient la butée en position.

Après montage du dispositif de débrayage sur la pièce d'accostage, on applique une pression à partir d'un maître cylindre par l'intermédiaire d'une canalisation pour rétracter la tige et la butée.

Toutes ces dispositions sont compliquées, longues à mettre en oeuvre et pas compatibles avec un montage en aveugle. Elles conduisent à augmenter la taille de la pièce fixe de l'actionneur.

La présente invention a pour objet de pallier ces inconvénients et donc de créer une nouvelle disposition économique permettant un encliquetage aisé en aveugle et rapide du dispositif de débrayage à actionneur hydraulique avec sa pièce d'accostage associée.

Suivant l'invention, un dispositif de débrayage du type sus-indiqué est caractérisé en ce que l'actionneur hydraulique comporte une deuxième chambre de commande indépendante de la première chambre de commande et délimitée au moins en partie par la pièce fixe et la pièce mobile, pour manoeuvre de ladite pièce mobile et de ladite butée de débrayage axialement en sens inverse du sens de débrayage.

Grâce à l'invention, le montage par encliquetage se fait en aveugle. En effet, lors de l'encliquetage il suffit de pressuriser la deuxième chambre de commande en sorte que la butée de débrayage fait saillie axialement par rapport à la pièce fixe.

Cette pressurisation s'effectue rapidement en sorte que les temps de montage sont réduits. De plus les pièces fixe et mobile restent simples et l'on tire parti de la pièce mobile, que l'on déplace en sens inverse pour l'encliquetage ; le volume de la première chambre étant alors minimal.

Après encliquetage on relâche la pression dans la deuxième chambre de commande. Cette deuxième chambre étant indépendante de la première chambre, on peut la pressuriser avec un fluide distinct du fluide pressurisant la première chambre de commande.

On peut également, après avoir dépressurisé la première chambre, pressuriser la deuxième chambre pour décoincer l'organe de couplage et faciliter le démontage du dispositif de débrayage.

Ainsi, grâce à la deuxième chambre, on bénéficie en permanence d'une butée potentielle que l'on peut rendre aisément opérationnelle par pressurisation de la deuxième chambre.

Suivant une caractéristique importante de l'invention la deuxième chambre de commande est commandée pneumatiquement pour montage du dispositif débrayeur sur sa pièce d'accostage.

Ainsi on peut pressuriser aisément et rapidement la deuxième chambre sur chaîne de montage, par exemple à l'aide d'un pistolet à air comprimé, pour effectuer un montage en aveugle.

Après encliquetage on retire le pistolet et la deuxième chambre de commande se vide aisément, naturellement et rapidement.

En variante la deuxième chambre de commande peut être pressurisée pneumatiquement par avance et fermée à l'aide d'une valve d'obturation que l'on ouvre après encliquetage.

On appréciera que cette deuxième chambre pressurisée pneumatiquement, par exemple à l'air comprimé, constitue une butée élastique et que la pression qui règne dans cette deuxième chambre n'est pas trop importante, en sorte que lors de l'appariement du dispositif de débrayage avec la pièce d'accostage on ne risque pas d'endommager les pièces et que l'air ne pénètre pas dans la première chambre de commande.

Il en va tout autrement lorsque l'on pressurise cette deuxième chambre avec un fluide non compressible, qui pose par la suite des problèmes d'évacuation.

Il est ainsi créé une butée élastique escamotable rapidement par dépressurisation de la deuxième chambre.

Dans tous les cas, la première chambre de commande n'est pas pressurisée. En variante la première chambre peut être préremplie et l'on évacue son fluide lors du montage ou du démontage.

On appréciera que l'on peut continuer à employer des pièces d'accostage standards telles celles par exemple décrites dans le document FR-A-2 653 195 auquel correspond le brevet US-A-5,113,989.

Dans ce cas, on peut décrocheter les brins du jonc pour l'ouvrir avant montage, en sorte que les efforts d'encliquetage sont réduits.

Après assemblage on vient refermer le jonc par crochetage de ces brins.

Il est même possible de rallonger l'évidement d'engagement, que présente usuellement la butée de débrayage pour coopération avec son jonc associé.

Avantageusement, l'orifice d'alimentation de la deuxième chambre est implanté au voisinage de la zone de fixation de la partie fixe avec la boite de vitesses, ce qui simplifie la fabrication des pièces.

Dans une forme de réalisation la pièce mobile (le piston) est montée à l'intérieur d'une cavité délimitée par la pièce fixe et un tube-guide servant à la fixation de la pièce fixe.

Le piston a alors avantageusement une extrémité avec un rebord transversal dirigé en direction opposée à l'axe de l'ensemble. Ce rebord délimite ainsi naturellement deux chambres.

En variante, on forme la deuxième chambre de commande à la faveur d'un manchon d'appui, que présente le dispositif de débrayage pour appui d'un ressort de rappel. Dans tous les cas, on tire parti des pièces existantes et ce de manière simple en créant un orifice.

On appréciera en pressurisant la deuxième chambre que l'on comprime le ressort de rappel, ce qui permet de décoincer l'organe de couplage et de faciliter le démontage du dispositif débrayeur.

De plus le dispositif de débrayage peut être équipé d'un soufflet de protection accessible de l'extérieur, qui ne risque pas d'être déchiré lors de l'encliquetage.

La description qui va suivre illustre l'invention en regard des dessins annexés dans lesquels :
- la figure 1 est une vue en coupe axiale avec représentation partielle des blocs primaire et secondaire et du dispositif de débrayage selon l'invention après son assemblage avec sa pièce d'accostage associée ;
- la figure 2 est une vue agrandie de la figure 1 montrant à plus grande échelle le dispositif de débrayage selon l'invention ;
- la figure 3 est une vue en coupe selon la ligne 3-3 de la figure 2 ;
- la figure 4 est une vue en coupe selon la ligne 4-4 de la figure 2 ;
- les figures 5 et 6 sont des vues en élévation montrant le jonc de couplage respectivement dans la position fermée et ouverte ;
- la figure 7 est une vue en coupe axiale d'un dispositif de débrayage en position embrayée et non équipée de la deuxième chambre de commande selon l'invention ;
- la figure 8 est une vue en coupe analogue à la figure 7 montrant le dispositif de débrayage, selon une seconde réalisation de l'invention, en position saillante avant son encliquetage avec la pièce d'accostage ;
- les figures 9 et 10 sont des vues schématiques montrant la position de la butée de débrayage respectivement après son encliquetage avec sa pièce d'accostage et pendant son encliquetage avec ladite pièce d'accostage.

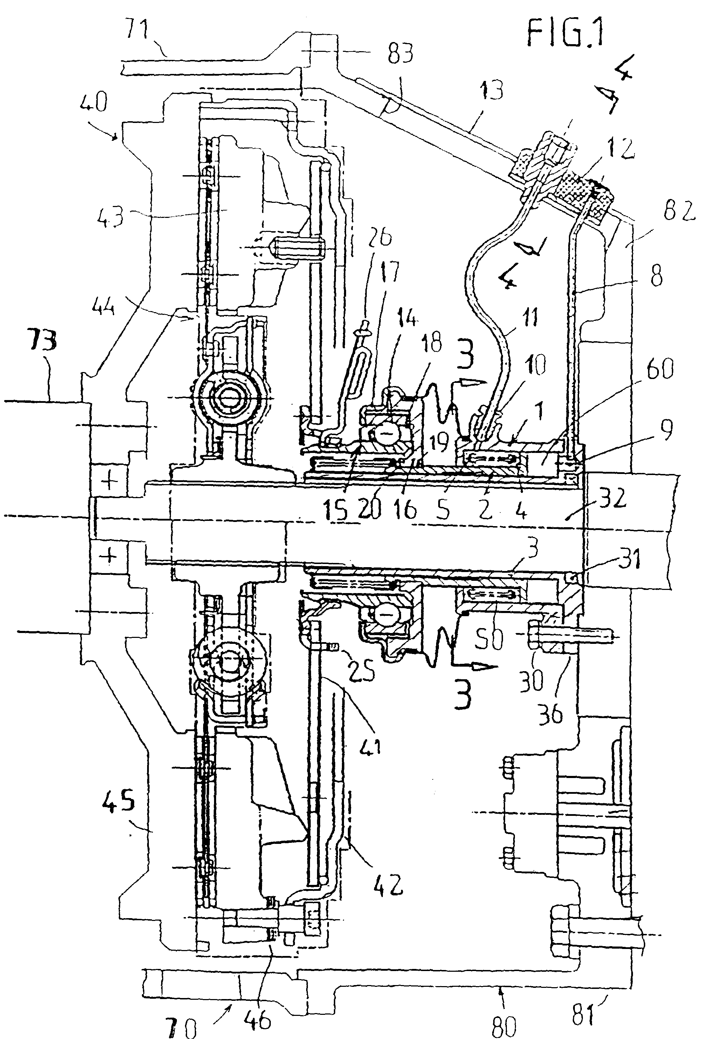

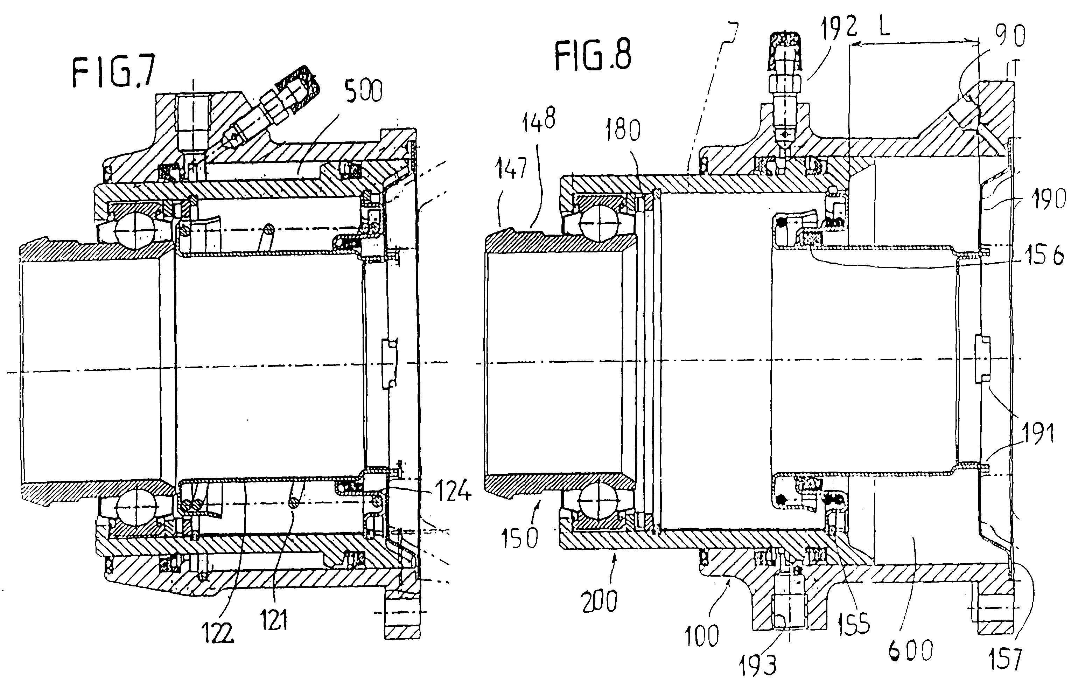

Dans ces figures, il s'agit d'assembler par encliquetage un dispositif de débrayage, doté d'une butée de débrayage 15 (figure 1), 150 (figure 8), sur une pièce d'accostage 25 d'un embrayage 40 du type tiré pour véhicule automobile à moteur à combustion interne.

La pièce d'accostage 25 appartient à un bloc primaire 70 (figure 1) comprenant le moteur à combustion interne avec son carter 71, tandis que le dispositif de débrayage appartient à un bloc secondaire 80 comprenant la boite de vitesses 82 avec sa cloche 81 propre à être fixée avec le carter 71.

Des moyens de solidarisation en traction sont établis entre la pièce d'accostage 25 et le dispositif de débrayage pour montage par encliquetage du dispositif de débrayage sur sa pièce d'accostage 25 rapportée sur le dispositif débrayeur de l'embrayage 40. Ici ce dispositif débrayeur consiste en un diaphragme 41.

Pour mémoire on rappellera que l'embrayage 40, outre le diaphragme 41, comporte un couvercle 42, un plateau de pression 43, lié en rotation au couvercle 42 tout en étant monté mobile axialement par rapport à celui-ci ici par des languettes tangentielles 46, un disque de friction 44 et un plateau de réaction 45.

L'ensemble des pièces 41,42,43, de formes annulaires, forme un mécanisme d'embrayage rapporté par son couvercle 42, à l'aide de vis non visibles, sur le plateau de réaction 45 lié en rotation au vilebrequin 73 du moteur à combustion interne.

Le disque 44 présente, à sa périphérie externe, des garnitures de friction propres à être serrées axialement entre les plateaux 43 et 45, et, à sa périphérie interne, un moyeu cannelé intérieurement pour liaison en rotation avec l'arbre 32 d'entrée de la boite de vitesses.

En position embrayage engagé le diaphragme 41 prend appui par la partie externe de sa rondelle Belleville sur un appui porté par le couvercle 42 et par la partie interne de sa rondelle Belleville sur un bossage fragmenté du plateau de pression 43 pour solliciter ledit plateau 43 en direction du plateau de réaction 45 et serrage des garnitures de frottement du disque 44 entre lesdits plateaux.

Le couple est donc transmis du vilebrequin 73 à l'arbre d'entrée 32.

Pour désengager l'embrayage, il faut agir en traction sur l'extrémité des doigts du diaphragme, s'étendant radialement vers l'intérieur à partir de la périphérie interne de la rondelle Belleville, pour faire basculer celui-ci et faire cesser l'action de serrage exercée sur le plateau 43 afin de libérer les garnitures du disque 44.

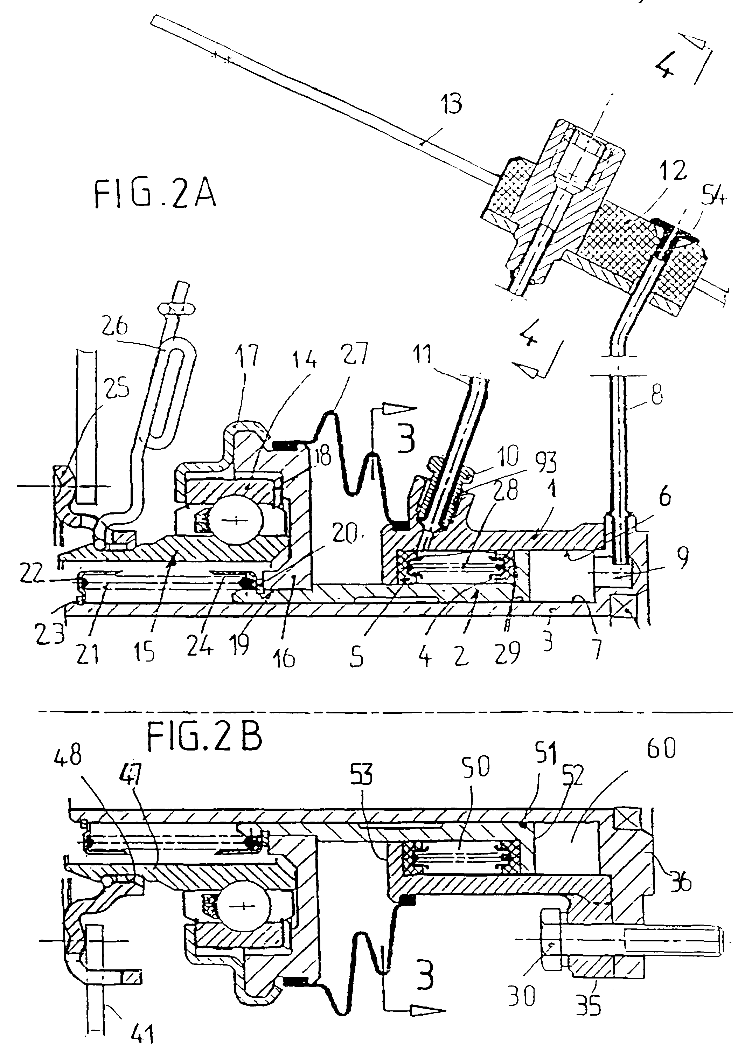

La manoeuvre s'effectue à l'aide d'un montage de butée de débrayage comportant la pièce d'accostage 25, le dispositif de débrayage et des moyens de solidarisation en traction établis entre la pièce d'accostage 25 et une pièce d'attaque 47 (figure 2) 147 (figure 8) appartenant à la butée de débrayage.

Ces moyens sont propres à assurer une liaison axiale entre les pièces 25,47 allant du dispositif débrayeur 41 à la butée de débrayage 15,150.

Ils comportent, d'une part, un organe de couplage 26 élastiquement déformable radialement, qui est au moins partiellement engagé dans un évidement de dilatation ménagé pour lui sur l'une desdites pièces d'accostage ou d'attaque, en faisant saillie à l'état libre, radialement vis-à-vis de ladite pièce, et, d'autre part, une portée d'entraînement qui est ménagée à la faveur d'un évidement 48,148 pratiqué sur l'autre desdites pièces d'attaque ou d'accostage et avec laquelle ledit organe de couplage coopère axialement en appui dans le sens axial considéré.

Toutes les dispositions décrites dans les documents FR-A-2 304 826 et FR-A-2 651 846 sont envisageables, mais ici l'organe de couplage est un jonc élastique du type de celui décrit dans le document FR-A-2 653 195 (US-A-5 113 989) auquel on se reportera.

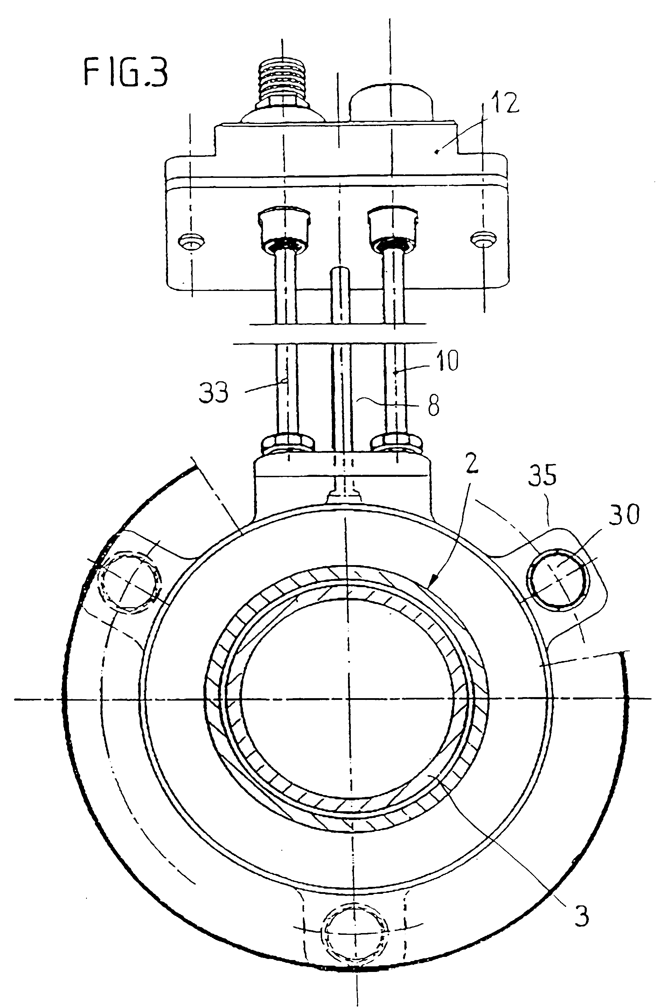

La pièce d'accostage 25 est semblable à celle de la figure 3 de ce document. Elle comporte donc une collerette profilée, propre à son appui sur les extrémités des doigts du diaphragme 41, et d'un seul tenant avec ladite collerette, une douille, destinée à traverser axialement ledit diaphragme à la faveur de l'ouverture centrale de celui-ci, dans laquelle débouchent les doigts du diaphragme.

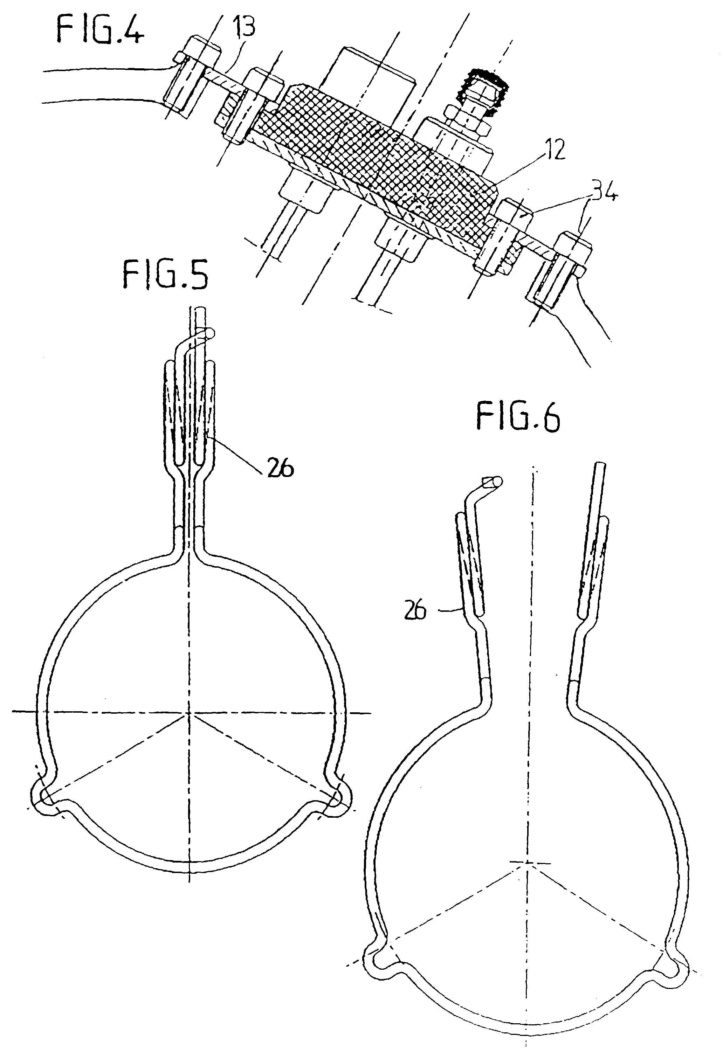

Le jonc de couplage 26, ouvert à l'état libre, s'étend annulairement à l'intérieur de ladite douille. Il est élastiquement déformable radialement et est propre à un attelage de la butée de débrayage 15,150 par simple encliquetage de celle-ci, au moins dans le sens axial allant de la collerette audit jonc, ladite douille présentant deux évidements distincts, pour passage chacun d'un brin du jonc 26, séparés l'un de l'autre par un pont. Ces brins sont dirigés vers l'extérieur de la douille en étant crochetés l'un sur l'autre (figure 5).

Les brins sont chacun dotés d'une déformation en forme de boucle allongeant leur longueur de manière élastique.

Le jonc présente également deux pattes (figures 5,6) en forme d'oreilles engagées chacune dans une ouverture de la douille.

Il est ainsi possible d'effectuer un déclipsage en décrochetant les brins (figure 6).

La pièce d'accostage 25 est rapportée sur l'extrémité des doigts du diaphragme grâce à des doigts de retenue portés en porte-à-faux par des pattes qui traversent les doigts du diaphragme à la faveur des fentes prévues entre ceux-ci.

Ces doigts de retenue s'étendent parallèlement à la collerette pour assurer en coopération avec la collerette de la pièce 25, le maintien de la pièce d'accostage 25 sur le diaphragme 41.

Le dispositif de débrayage comporte ici, d'une part, un actionneur hydraulique 1,2,3-100,200 comprenant au moins une pièce fixe 1,100 et une pièce mobile 2,200 en relation de cylindre piston pour définition d'une première chambre de commande 50,500 et, d'autre part, la butée de débrayage 15,150 attelée à la pièce mobile 2,200 et manoeuvrable par celle-ci dans un premier sens axial, dit sens de débrayage, pour transmettre par traction une force de débrayage à la pièce d'accostage 25.

Pour assemblage de ce dispositif de débrayage avec la pièce d'accostage, il faut rapprocher le moteur par rapport à la boite de vitesses pour pénétration de l'arbre 32 dans l'alésage interne du moyeu du disque 44 et encliquetage de la pièce d'accostage 25 avec la butée de débrayage 15,150 grâce à l'organe de couplage, aux évidements d'engagement, de dilatation et à la portée d'entraînement.

Pour ce faire, suivant l'invention, l'actionneur hydraulique 1,2,3-100,200 comporte une deuxième chambre de commande 60,600 indépendante de la première chambre de commande 50,500 et délimitée au moins en partie par la pièce fixe 1,100 et la pièce mobile 2,200 pour manoeuvre de ladite pièce mobile et de ladite butée de débrayage axialement en sens inverse au sens de débrayage.

Suivant une caractéristique, la deuxième chambre 60,600 est pressurisée pneumatiquement pour montage (ou assemblage) du dispositif débrayeur sur sa pièce d'accostage. Après ce montage on dépressurise la deuxième chambre.

Dans les figures 2 et 8, l'orifice d'alimentation 9,90 de cette deuxième chambre 60,600 est implanté au niveau de la zone de fixation de la partie fixe 1 avec la boîte de vitesses 82 constituant une pièce fixe.

Dans les figures 1 à 4, la butée de débrayage 15 comporte un roulement à billes 14 dont la bague intérieure est tournante et forme un élément d'attaque 47 présentant un évidement d'engagement 48, dont une extrémité forme la portée d'entraînement pour le jonc 26.

La bague extérieure fixe de ce roulement 14 est soumise à l'action d'une rondelle élastique 18, ici une rondelle ondulée, prenant appui sur un flasque 16 et sur l'une des tranches de la bague externe du roulement 14, pour solliciter l'autre tranche de cette bague au contact d'une cuvette 17 rapportée par sertissage sur le flasque 16 comportant pour ce faire à sa périphérie un rebord annulaire d'orientation axiale cranté.

Le roulement 14 est monté avec jeu radial par rapport à la cuvette 17 et audit rebord annulaire, en sorte que la butée est du type autocentreuse à autocentrage maintenu.

Le flasque 16 est monté sur l'extrémité avant de diamètre réduit 19 du piston 2, et est calé axialement entre l'épaulement formé à la faveur du changement de diamètre du piston 2 et un circlips d'arrêt 20 monté dans une gorge de l'extrémité 19.

Ce piston 2 constitue la pièce mobile selon l'invention. Il consiste en un manchon dont l'extrémité arrière (opposée à l'extrémité 19) présente un rebord transversal 52 dirigé en direction opposée de l'axe de l'ensemble.

Les pistons 2 coulisse axialement le long du tube de guidage 3.

Ce rebord pénètre dans une cavité délimitée par un tube de guidage 3 et une pièce annulaire 1, en forme de manchon, formant la partie fixe selon l'invention.

Les pièces 1 et 3 forment un cylindre pour le piston 2.

Pour ce faire la pièce 1 présente à son extrémité avant (celle la plus proche du flasque 16) un rebord transversal 53 dirigé vers l'axe de l'ensemble et traversé centralement à étanchéité par le piston 2, tandis que le tube de guidage 1 présente à son extrémité arrière un rebord transversal 36 décrit ci-après.

Le tube de guidage 3 sert de support et de centrage à tout l'ensemble, notamment au piston 2, en empêchant que des réactions et des charges parasitaires arrivent au diamètre de coulissement des joints d'étanchéité 4 et 5, ici avantageusement à double effet. Ces joints 4 et 5 permettent de réaliser une étanchéité de la chambre 50 délimitée par les pièces 1,2 concentriques et leurs rebords 52,53.

Un ressort 28 de rappel est interposé entre les joints 4 et 5 en prenant pour ce faire appui sur des coupelles d'appui 29 interposées entre chaque extrémité du ressort à boudin et respectivement le joint 4 et 5.

La pièce 3 présente à son extrémité adjacente à la boite de vitesses 82 un rebord transversal de fixation 36 dirigé à l'opposé de l'axe de l'ensemble. Ce rebord est épaulé pour centrage de la pièce 1, qui présente des oreilles de fixation 35.

Ces oreilles 35 sont traversées par des organes de fixation 30, ici des vis, en variante des rivets ou boulons, traversant également le rebord 36 pour fixation de l'ensemble fixe (le cylindre) 1,3 à la pièce fixe du véhicule, ici le carter de la boite de vitesses 82.

Ici suivant une caractéristique la deuxième chambre de commande 60 est délimitée par la pièce 1 et le tube 3, elle est fermée par le rebord 36 et le rebord d'extrémité 52 du piston 2.

Ce rebord 52 permet de délimiter, de manière simple, à l'intérieur de la cavité définie par les pièces 1 et 3 deux chambres 50,60.

Ainsi la deuxième chambre 60 est délimitée par la périphérie interne 6 de la pièce 1 par la périphérie externe 7 de la pièce 3, et les rebords 52,36.

Un soufflet d'étanchéité 27, à extrémités crantées, s'étend entre la pièce 1 et le flasque 16 pour empêcher que des saletés ou autres souillures viennent polluer le piston 2 au niveau du rebord 53 de la pièce 1 et gêner ainsi son coulissement.

Un ressort de précharge 21 est également prévu pour assurer un contact permanent de la pièce d'accostage 25 avec le diaphragme 41, ainsi qu'un serrage permanent du jonc 26 entre la douille de la pièce d'accostage 25 et la portée d'engagement formée à la faveur de l'évidement 48 de la pièce d'attaque 47 de la butée 15.

Ce ressort 21, implanté à l'intérieur de l'élément d'attaque 47, agit entre deux appuis appartenant chacun à une pièce de support et de guidage 22,24. Ces pièces 22 et 24 sont en forme de cuvette, la cuvette 24 étant portée par le piston 2 (l'extrémité avant de celui-ci) en ayant son fond coincé entre l'extrémité du ressort à boudin 21 et le circlips 20, tandis que la cuvette 22 est portée par le tube fixe 3 (l'extrémité avant de celui-ci) en étant coincé entre l'autre extrémité du ressort 21 et un circlips d'arrêt 23 engagé dans une gorge prévue à cet effet dans le tube 3.

Ainsi l'élément d'attaque 47 est constamment en appui contre le jonc 26.

A chaque chambre 50,60 est associé un orifice d'alimentation respectivement 93,9.

Plus précisément la première chambre 50 est alimentée à partir d'un raccord 10 et d'un tuyau 11. Le raccord 10 est vissé dans l'orifice fileté 93 de la chambre 50 (figure 2).

La seconde chambre 60 est alimentée également à partir d'un tuyau 8 débouchant dans un trou 9 pratiqué économiquement dans le flasque 36, ce qui permet de ne pas modifier la pièce 1, ni d'augmenter l'encombrement.

Les tuyaux 8 et 11 sont connectés à un connecteur 12 commun d'alimentation fixé à un couvercle 13 venant obturer une ouverture 83 de faible dimension pratiquée dans la cloche 81.

Bien entendu une trappe de visite (non visible) est prévue, de manière connue en soi, pour accès au jonc 26 afin d'ouvrir et de refermer celui-ci.

Le trou 9 a une forme en L, sa partie verticale servant à l'emmanchement du tuyau 8, tandis que sa partie axiale est borgne.

Il est prévu un orifice pour la purge de la chambre 50 (figure 3) relié à un tuyau de purge 33 débouchant dans le connecteur 12 (figures 3 et 4).

Le connecteur 12 est fixé à l'aide de vis 34 au couvercle 13, lui-même fixé par des vis 34 à la cloche 81.

Ainsi pour procéder au montage par encliquetage, on met sous pression pneumatique la chambre 60 à l'aide par exemple d'un pistolet à air comprimé alimentant le tuyau 8. La butée 15 avance alors à l'encontre de la charge exercée par les ressorts 28 et 21 pour venir s'accrocher sur sa pièce d'accostage 25.

On notera que tout ceci se fait rapidement en aveugle sur chaîne de montage.

En effet, ce n'est qu'après avoir rapproché les blocs 70 et 80 et fixé ceux-ci que l'on injecte l'air comprimé dans la chambre 60, ce qui fait avancer le piston 2 avec la butée 15 (vers la gauche de la figure 2) et permet un assemblage automatique par clipsage avec la pièce d'accostage 25. Après on retire le pistolet, l'air s'évacue et on ferme le tuyau 8 à l'aide d'un bouchon 54 (figure 2) doté d'un passage central pour dépressuriser la deuxième chambre 60.

Pour désassembler par la suite le dispositif de débrayage avec la pièce 25, il suffit, grâce à la trappe de visite de la cloche 81, d'ouvrir le jonc 26 en décrochetant ses brins (figure 6).

Avantageusement, après ouverture du jonc 26, on dépressurise la première chambre 50 et on pressurise la deuxième chambre 60, par exemple à l'aide du pistolet précité, pour faire avancer la butée 15 à l'encontre du ressort de rappel 21 et décoincer le jonc 26 ce qui facilite le démontage.

En variante la chambre 60 peut être mise sous pression pneumatique par avance et c'est lors du rapprochement des deux blocs 70 et 80 que l'on procède au clipsage.

Dans ce cas, il faut prévoir une valve d'obturation permettant après montage de dépressuriser la chambre 60.

On appréciera que dans tous les cas, l'air, ou autre gaz, contenu dans la chambre 60 s'évacue très facilement et rapidement, et que la chambre 50 n'est pas pressurisée ou bien que l'on évacue le fluide contenu dans celle-ci, et ce aisément en agissant au niveau du connecteur 12 afin d'ouvrir l'alimentation de ladite chambre, pour procéder au montage ou au démontage du dispositif débrayeur par rapport à sa pièce d'accostage 25.

Après montage, la chambre 60 étant dépressurisée, il suffit d'alimenter sous pression la chambre 50 à partir du tuyau 11 pour déplacer le piston 2 et la butée 15 vers la droite de la figure 2 et agir en traction grâce au jonc 26 et à la pièce d'accostage sur l'extrémité des doigts du diaphragme 41 pour faire basculer celui-ci.

Bien entendu un roulement 31 est interposé entre le rebord 36 et l'arbre 32 pour guidage en rotation de celui-ci.

De même un joint d'étanchéité 51 est porté par le piston 2 au voisinage de son extrémité axiale 52 monté dans la cavité délimitée par les pièces 1,3.

Dans cet exemple de réalisation les chambres 50,60 sont disposées axialement l'une derrière l'autre comme dans la figure 8, dans laquelle les éléments identiques à ceux des figures 1 à 4 portent les mêmes références augmentées de 100. La chambre de commande 600 est formée ici à la faveur de la pièce fixe 100, du piston mobile 200, des pièces de butée et de guidage 122,124 du ressort de précharge 121.

Dans ces figures, la pièce 122 sert d'appui au ressort de précharge 121 et a une forme de manchon avec à l'une de ses extrémités une cuvette pour appui et guidage de l'extrémité concernée du ressort 121.

L'autre extrémité de ce ressort 121 s'appuie sur la pièce 124 de forme tortueuse avec, une portion externe transversale calée axialement sur le piston 200 à l'aide d'un circlips 155 monté dans une gorge du piston 200, une portion médiane en forme de cuvette pour appui du ressort 121 et une portion interne formant un retour radial. La pièce 124 est traversée par le manchon 122 avec intervention d'une étanchéité entre ces deux pièces, un joint d'étanchéité 156 avantageusement à double effet étant prévu pour cela entre ces deuxdites pièces 122,124, ledit joint intervenant entre la portion interne de la pièce 124, en étant calée par son retour radial, et la périphérie externe du manchon 122.

Une pièce 157 est fixée à la pièce 100, par exemple par sertissage, cette pièce a une forme tortueuse avec à sa périphérie interne une douille se raccordant à un flasque tranversal percé localement pour passage de pattes et fixation par agrafage du manchon 122, avec sertissage (en 191) desdites pattes.

L'orifice d'alimentation 90 de la chambre 600 est formé au voisinage de la pièce de fixation 100, plus particulièrement dans les oreilles de fixation de cette pièce.

Ainsi qu'on l'aura compris, cette pièce fixe 100 remplace les pièces 1 et 3 et est fixée directement sur la boîte de vitesses 82. Elle forme un cylindre concentriquement au piston 200.

La pièce 100 présente à son extrémité axiale libre un rebord radial dirigé vers l'axe de l'ensemble servant au guidage au piston 200, dont l'une des extrémités axiales forme un rebord pour appui de la bague extérieure du roulement 150 et dont l'autre extrémité axiale forme un rebord dirigé à l'opposé de l'axe de l'ensemble pour fermer la première chambre de commande 500 délimitée directement par les pièces 100,200 et lesdits rebords.

Bien entendu des joints d'étanchéité représentés en gris sur ces figures sont prévus.

En envoyant de l'air comprimé par l'orifice 90, on pressurise la chambre 600, en sorte que la butée 150 se déplace de la distance L et fait saillie par rapport à la pièce 100 formant cylindre.

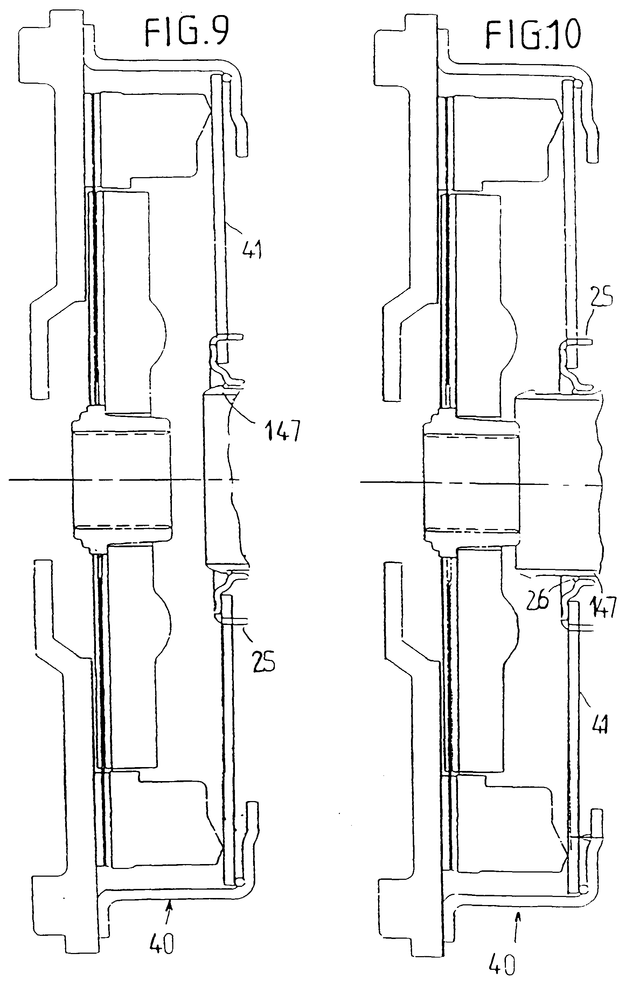

Ainsi la pièce d'attaque 147 (figure 10) pénètre à l'intérieur de la pièce d'accostage et en dépressurisant la chambre 600, on obtient un coincement du jonc 26 entre la pièce d'attaque 147 et la pièce d'accostage 25 (figure 9).

Dans tous les cas, la deuxième chambre de commande 60,600 est implantée à l'intérieur de la pièce fixe et les deux chambres 50,500-60,600 sont délimitées par la pièce mobile 2,200 en étant décalées axialement.

Lors du clipsage le volume de la première chambre est minimal.

Ainsi à la figure 8, la première chambre n'est pas remplie.

Bien entendu la présente invention n'est pas limitée à l'exemple de réalisation décrit. En particulier l'orifice d'alimentation de la deuxième chambre peut être placé en un autre endroit.

A la figure 8 on peut inverser les structures, le piston 200 entourant alors le cylindre 100. Dans ce cas, la vis de purge 192 et l'orifice fileté d'alimentation 193 de la première chambre de commande 500 portés par le cylindre 100 sont placés à l'arrière du cylindre 100.

On peut utiliser n'importe quel type de conduit (tuyau souple, tuyau rigide ou autre) pour relier les chambres de commande 50,500-60,600 au connecteur commun d'alimentation 12.

Enfin, avantageusement, les joints d'étanchéité prévus pour les première et deuxième chambres de commande sont du type à double effet, pour éviter que de l'air ne pénètre à l'intérieur de la première chambre de commande et la pression régnant dans la deuxième chambre de commande est choisie pour vaincre l'action des ressorts de précharge.

## Revendications

1. Dispositif de débrayage, pour action en traction sur la pièce d'accostage (25) d'un embrayage (40), en particulier pour véhicule automobile, comportant d'une part, un actionneur hydraulique (1,2,3-100,200) comprenant au moins une pièce fixe (1,100) et une pièce mobile (2,200) en relation de cylindre piston pour définition d'une première chambre de commande (50,500) et, d'autre part, une butée de débrayage (15,150) attelée à la pièce mobile (2,200) et manoeuvrable par celle-ci dans un premier sens axial, dit sens de débrayage, pour transmettre par traction une force de débrayage à la pièce d'accostage (25), caractérisé en ce que ledit actionneur hydraulique (1,2,3-100,200) comporte une deuxième chambre de commande (60,600) indépendante de la première chambre de commande (50,500) et délimitée au moins en partie par la pièce fixe (1,100) et la pièce mobile (2,200) pour manoeuvre de ladite pièce mobile et de ladite butée de débrayage axialement en sens inverse au sens de débrayage.

2. Dispositif selon la revendication 1, caractérisé en ce que la deuxième chambre de commande (60,600) est pressurisée pneumatiquement pour montage du dispositif débrayeur sur sa pièce d'accostage (25).

3. Dispositif selon la revendication 2, caractérisé en ce que la deuxième chambre de commande (60,600) est reliée par un conduit (8) à un connecteur commun d'alimentation (12) prévu également pour alimenter la première chambre de commande (50,500) à partir d'un autre conduit (11).

4. Dispositif selon la revendication 3, caractérisé en ce que le connecteur commun (12) est fixé par un couvercle (13) sur une cloche (81).

5. Dispositif selon la revendication 2, caractérisé en ce que la deuxième chambre de commande (60,600) est pressurisée par avance en étant fermée par une valve d'obturation pour montage du dispositif débrayeur sur sa pièce d'accostage (25).

6. Dispositif selon la revendication 1, dans lequel la partie fixe (1,100) présente une zone (35) pour sa fixation à une pièce fixe (82), caractérisé en ce que la deuxième chambre de commande (60,600) présente un orifice (9,90) implanté au niveau de la zone de fixation de la partie fixe (1,100).

7. Dispositif selon la revendication 1, dans lequel la pièce mobile (2) est montée à l'intérieur d'une cavité délimitée par la pièce fixe (1) et un tube-guide (3) servant à la fixation de la pièce fixe, caractérisé en ce que la pièce mobile (2) présente à l'intérieur de ladite cavité une extrémité avec un rebord transversal (52) dirigé en direction opposée à l'axe de l'ensemble, ledit rebord délimitant la deuxième chambre de commande (60).

8. Dispositif selon la revendication 7, caractérisé en ce que cette deuxième chambre de commande (60), délimitée par la pièce fixe (1) et le tube-guide (3), est fermée par ledit rebord (52) de la pièce mobile (2) et par un rebord transversal (36) dirigé à l'opposé de l'axe de l'ensemble, que présente le tube-guide (3).

9. Dispositif selon la revendication 8, caractérisé en ce que ledit rebord transversal (36) présente un trou (9) en forme de L pour alimentation de la deuxième chambre de commande (60).

10. Dispositif selon la revendication 8, caractérisé en ce que ledit rebord transversal (36) est épaulé pour centrage de la pièce fixe (1), qui présente des oreilles de fixation (35) traversées par des organes de fixation (30) traversant également ledit rebord (36) pour fixation à une pièce fixe (82) de l'ensemble pièce fixe (1) - tube-guide (3).

11. Dispositif selon la revendicaton 1, caractérisé en ce que la deuxième chambre de commande (600) est formée à la faveur d'un manchon d'appui (122), que présente le dispositif de débrayage pour un ressort de rappel (121).

12. Dispositif selon la revendication 11, caractérisé en ce que la chambre de commande (600) est formée à la faveur dudit manchon d'appui (122), d'une pièce fixe (100), d'un piston (200) mobile par rapport à la pièce fixe (100) et d'une seconde pièce d'appui (124) pour le ressort de précharge (121).

13. Dispositif selon la revendication 12, caractérisé en ce que la seconde pièce d'appui (124) a une forme tortueuse avec une portion externe transversale calée axialement sur le piston (200), une portion médiane en forme de cuvette pour appui dudit ressort (121) et une portion interne pour montage d'un joint d'étanchéité (156) avec le manchon d'appui (122).

14. Dispositif selon la revendication 13, caractérisé en ce que le manchon d'appui (122) est fixé par agrafage à une pièce (157) fixée à la pièce fixe (100).

15. Dispositif selon la revendication 1, caractérisé en ce que les deux chambres commande (50,500-60,600) sont décalées axialement l'une par rapport à l'autre en étant séparées par la pièce mobile (2,200).

## Patentansprüche

1. Ausrückvorrichtung zur Zugkraftbetätigung eines Kupplungsdruckrings (25), insbesondere für Kraftfahrzeuge, die einerseits einen hydraulischen Betätiger (1,2, 3 - 100, 200) umfaßt, der wenigstens ein feststehendes Teil (1, 100) und ein bewegliches Teil (2, 200) im Verhältnis Zylinder und Kolben zur Bildung einer ersten Betätigungskammer (50, 500) enthält, und andererseits ein Ausrücklager (15, 150), das mit dem beweglichen Teil (2, 200) verbunden ist und durch dieses in einer als Ausrückrichtung bezeichneten ersten axialen Richtung betätigt werden kann, um unter Zugkraftbetätigung eine Ausrückkraft auf den Druckring (25) zu übertragen , **dadurch gekennzeichnet**, daß der besagte hydraulische Betätiger (1, 2, 3 - 100, 200) eine zweite Betätigungskammer (60, 600) umfaßt, die von der ersten Betätigungskammer (50, 500) unabhängig ist und wenigstens teilweise durch das feststehende Teil (1, 100) und das bewegliche Teil (2, 200) begrenzt wird, um das besagte bewegliche Teil und das besagte Ausrücklager axial in entgegengesetzter Richtung zur Ausrückrichtung zu betätigen.

2. Vorrichtung nach Anspruch 1 , **dadurch gekennzeichnet**, daß die zweite Betätigungskammer (60, 600) für die Anbringung der Ausrückvorrichtung am zugehörigen Druckring (25) pneumatisch unter Druck gesetzt wird.

3. Vorrichtung nach Anspruch 2 , **dadurch gekennzeichnet**, daß die zweite Betätigungskammer (60, 600) durch eine Leitung (8) mit einem gemeinsamen Verbindungsstück (12) verbunden ist, das auch für die Befüllung der ersten Betätigungskammer (50, 500) von einer anderen Leitung (11) aus vorgesehen ist.

4. Vorrichtung nach Anspruch 3 , **dadurch gekennzeichnet**, daß das gemeinsame Verbindungsstück (12) durch einen Deckel (13) an einem Gehäuse (81) befestigt ist.

5. Vorrichtung nach Anspruch 2 , **dadurch gekennzeichnet**, daß die zweite Betätigungskammer (60, 600) im voraus unter Druck gesetzt wird, wobei sie für die Anbringung der Ausrückvorrichtung am zugehörigen Druckring (25) durch ein Verschlußventil verschlossen ist.

6. Vorrichtung nach Anspruch 1, wobei der feststehende Teil (1, 100) eine Stelle (35) für seine Befestigung an einem feststehenden Element (82) aufweist , **dadurch gekennzeichnet**, daß die zweite Betätigungskammer (60, 600) eine Öffnung (9, 90) aufweist, die in Höhe der Befestigungsstelle des feststehenden Teils (1, 100) angeordnet ist.

7. Vorrichtung nach Anspruch 1, wobei das bewegliche Teil (2) im Innern einer Aufnahme gelagert ist, die durch das feststehende Teil (1) und ein Führungsrohr (3) für die Befestigung des feststehenden Teils begrenzt wird , **dadurch gekennzeichnet**, daß das bewegliche Teil (2) im Innern der besagten Aufnahme ein Ende mit einer Querrandleiste (52) aufweist, die in entgegengesetzter Richtung zur Achse der Baugruppe gerichtet ist, wobei die besagte Randleiste die zweite Betätigungskammer (60) begrenzt.

8. Vorrichtung nach Anspruch 7 , **dadurch gekennzeichnet**, daß diese zweite Betätigungskammer (60), die durch das feststehende Teil (1) und das Führungsrohr (3) begrenzt wird, durch die besagte Randleiste (52) des beweglichen Teils (2) und durch eine Querrandleiste (36) verschlossen wird, die in entgegengesetzter Richtung zur Achse der Baugruppe gerichtet und am Führungsrohr (3) vorgesehen ist.

9. Vorrichtung nach Anspruch 8 , **dadurch gekennzeichnet**, daß die besagte Querrandleiste (36) ein L-förmiges Loch (9) für die Befüllung der zweiten Betätigungskammer (60) aufweist.

10. Vorrichtung nach Anspruch 8, **dadurch gekennzeichnet**, daß die besagte Querrandleiste (36) mit einer Schulter für die Zentrierung des feststehenden Teils (1) versehen ist, das Befestigungsflügel (35) aufweist, durch die Befestigungsorgane (30) hindurchgehen, die auch durch die besagte Randleiste (36) hindurchgehen, um die Baugruppe aus feststehendem Teil (1) und Führungsrohr (3) an einem feststehenden Element (82) zu befestigen.

11. Vorrichtung nach Anspruch 1, **dadurch gekennzeichnet**, daß die zweite Betätigungskammer (600) mittels einer Auflagemuffe (122) gebildet wird, welche die Ausrückvorrichtung für eine Rückzugfeder (121) aufweist.

12. Vorrichtung nach Anspruch 11, **dadurch gekennzeichnet**, daß die Betätigungskammer (600) durch die besagte Auflagemuffe (122), ein feststehendes Teil (100), einen im Verhältnis zum feststehenden Teil (100) beweglichen Kolben (200) und ein zweites Lagerungsteil (124) für die Vorspannfeder (121) gebildet wird.

13. Vorrichtung nach Anspruch 12, **dadurch gekennzeichnet** , daß das zweite Lagerungsteil (124) eine gewundene Form aufweist, mit einem äußeren Querabschnitt, der axial am Kolben (200) befestigt ist, einem tellerförmigen Mittelabschnitt für die Auflage der besagten Feder (121) und einem inneren Abschnitt für die Anbringung einer Dichtung (156) zusammen mit der Auflagemuffe (122).

14. Vorrichtung nach Anspruch 13, **dadurch gekennzeichnet**, daß die Auflagemuffe (122) mittels Verklammerung an einem Teil (157) befestigt wird, das an dem feststehenden Teil (100) befestigt ist.

15. Vorrichtung nach Anspruch 1, **dadurch gekennzeichnet**, daß die beiden Betätigungskammern (50, 500 - 60, 600) axial zueinander versetzt sind, wobei sie durch das bewegliche Teil (2, 200) voneinander getrennt werden.

## Claims

1. A declutching mechanism, for working in traction on the connecting piece (25) of a clutch (40), in particular for a motor vehicle, including, firstly, an hydraulic actuator (1, 2, 3 - 100, 200) comprising at least one fixed member (1, 100) and a movable member (2, 200), in piston and cylinder relationship defining a first control chamber (50, 500), and secondly, a clutch release bearing (15, 150) attached to the movable member (2, 200) and manoeuvrable by the latter in a first axial direction referred to as a declutching direction, for transmitting a tractive declutching force to the connecting piece (25), characterised in that the said hydraulic actuator (1, 2, 3 - 100, 200) comprises a second control chamber (60, 600), which is independent of the first control chamber (50, 500) and delimited at least partly by the fixed member (1, 100) and the movable member (2, 200), for manoeuvre of the said movable member and the said clutch release bearing axially in the direction opposite to the declutching direction.

2. A mechanism according to Claim 1, characterised in that the second control chamber (60, 200) is pressurised pneumatically for the purpose of fitting the declutching mechanism on its connecting piece (25).

3. A mechanism according to Claim 2, characterised in that the second control chamber (60, 600) is connected through a conduit (8) to a common feed connector (12), which is also arranged to feed the first control chamber (50, 500) via another conduit (11).

4. A mechanism according to Claim 3, characterised in that the common connector (12) is fixed on a hood piece (81) through a cover (13).

5. A mechanism according to Claim 2, characterised in that the second control chamber (60, 600) is pressurised in advance, being closed by a stop valve for the purposes of fitting the declutching mechanism on its connecting piece (25).

6. A mechanism according to Claim 1, in which the fixed part (1, 100) has a zone (35) for its fastening to a fixed member (82), characterised in that the second control chamber (60, 600) has an orifice (9, 90) located at the level of the fastening zone of the fixed part (1, 100).

7. A mechanism according to Claim 1, in which the movable member (2) is mounted within a cavity which is defined by the fixed member (1) and a guide tube (3) for securing the fixed member, characterised in that the movable member (2) has within the said cavity an end portion having a transverse flange (52) extending away from the axis of the assembly, the said flange delimiting the second control chamber (60).

8. A mechanism according to Claim 7, characterised in that the said second control chamber (60), delimited by the fixed member (1) and the guide tube (3), is closed by the said flange (52) of the movable member (2) and by a transverse flange (36), which is part of the tube guide (3) and which is directed away from the axis of the assembly.

9. A mechanism according to Claim 8, characterised in that the said transverse flange (36) has an L-shaped hole (9) for feeding the second control chamber (60).

10. A mechanism according to Claim 8, characterised in that the said transverse flange (36) is shouldered for centring the fixed member (1), which has securing ears (35) through which there pass fastening members (30), which also pass through the said flange (36) so as to secure the assembly comprising the fixed member (1) and guide tube (3) to a fixed member (82).

11. A mechanism according to Claim 1, characterised in that the second control chamber (600) is defined in a sleeve (122) with which the declutching mechanism is provided for abutment with a return spring (121).

12. A mechanism according to Claim 11, characterised in that the control chamber (600) is defined by the said abutment sleeve (122), a fixed member (100), a piston (200) which is movable with respect to the fixed member (100), and a second member (124) for abutment with the preloading spring (121).

13. A mechanism according to Claim 12, characterised in that the second abutment member (124) has a sinuous shape, with a transverse outer portion located axially on the piston (200), a dish-shaped middle portion for engagement with the said spring (121), and an inner portion for mounting a ring (156) sealing it with the abutment sleeve (122).

14. A mechanism according to Claim 13, characterised in that the abutment sleeve (122) is secured in hooked relationship to a member (157) fixed to the fixed member (100).

15. A mechanism according to Claim 1, characterised in that the two control chambers (50, 500 - 60, 600) are offset axially with respect to each other, being separated by the movable member (2, 200).
